# EUROPEAN PATENT APPLICATION

(11) **EP 2 058 043 A1**
(43) Date of publication of application: **13.05.2009**
(21) Application number: 08163801.7
(22) Date of filing: 05.09.2008
(51) Int. Cl.: B01D 46/22, B01D 53/06

(54) **Method and device for removal of ionic odour-producing substances**

(30) Priority: 16.10.2007 PL 38355607
(71) Applicant: Politechnika Lubelska, 20-219 Lublin (PL)
(72) Inventor: Pawlowska, Malgorzata, 20-027, LUBLIN (PL); Pawlowski, Lucjan, 20-027, LUBLIN (PL); Wasag, Henryk, 20-510, LUBLIN (PL)
(74) Representative: Kaminski, Piotr

(57) **Abstract**

The present invention relates to a method and device for removal of ionic odour-producing substances. Method is characterised in that the gas is directed on preformed ion exchanger in the form of band made of ion exchange material acting as a filter which moves along the rollers, the lower part of the band is submerged in regeneration bath, the gas to be cleaned flows through partially depleted ionite where the odour producing substance is partially removed and subsequently partially purified gas passes through just regenerated ionite, where the remaining odour-producing impurities are removed. Device is characterised in that in the casing (1) there is a closed band (6a, 6b) made of ion exchange material acting as a filter which moves along the rollers (7) which are fixed in the corners of the frame (4) inside the casing (1) and is driven by two rollers (10), the casing (1) has inlet port (2) for supply of the gas to be cleaned and outlet port (3) to carry off the cleaned gas, the lower part of the filtering chamber forms a container (5) which has an inlet port (8) for supply of regeneration solution and an outlet port (9) for removal of post-regeneration solution.

## Description

The presence of odours in the environment presents serious nuisance. In their removal the filters filled with active carbon are most commonly used. The active carbon bed well removes the makromolecular compounds, but its sorption capacity for small molecules, such as H₂S, NH₃ is relatively low. Meanwhile in many places, in particular on animal farms, it is ammonia emission that is the main source of waste.

It is known from JP2005152560 that amino-phosphorylate ion-exchange resin can be used for removal of H₂S, NH₃ and mercaptans emitted in toilets etc. The mentioned pollutants are absorbed in the ion-exchange resin. Depleted ion-exchange resin requires utilization.

JP5317029 describes odours removal in fermentation process by the use of cation exchange resin and an anion exchange resin with optional addition of a synthetic adsorbent. Also in this case the resins when depleted require utilization.

Patent document DE10209364 describes ion exchange material, containing active carbon element. It is formed as a blanket that can be used for dogs and cats and that can absorb the odours, mainly coming from ammonia. After depletion of the sorption capacity, the filter required utilization.

In patent document JP2005152560 ion exchange materials where also shown to be used in production of disposable masks.

Different solution was presented in US2006008442 patent document. It exploited permanent binding of metal ions to the surface of nanoparticles. In such formed material specific odour-producing substances such as H₂S, NH₃ etc. were bound by metal ions.

Odour removal from large facilities becomes expensive when disposable filter inserts are used.

The present method includes directing of contaminated gas on preformed ion exchanger in the form of band which is made of ion exchange material acting as a filter which moves along the rollers. The lower part of the band is submerged in regeneration bath. The gas to be cleaned flows through partially depleted ionite, where the odour producing substance is partially removed and subsequently partially purified gas passes through just regenerated ionite, where the remaining odour-producing impurities are removed. The layer of ion exchange material moves and is regenerated in the lower part.

The essence of device for removal of odours from ionic odour-producing substances, consisting of casing in the shape of open chamber with container is that in the casing there is a closed band made of ion exchange material acting as a filter which moves along the rollers which are fixed in the corners of the frame inside the casing and is driven by two rollers fixed to the frame of the casing, the casing has inlet port for supply of the gas to be cleaned and outlet port to carry off the cleaned gas; the lower part of the filtering chamber forms a container which has an inlet port for supply of regeneration solution and an outlet port for removal of post-regeneration solution.

Beneficial effect of the present invention is that it allows simultaneous depletion and regeneration of formed filter insert. Furthermore in case of purification of gas coming from waste disposal depot the solution could be removed to reflux.

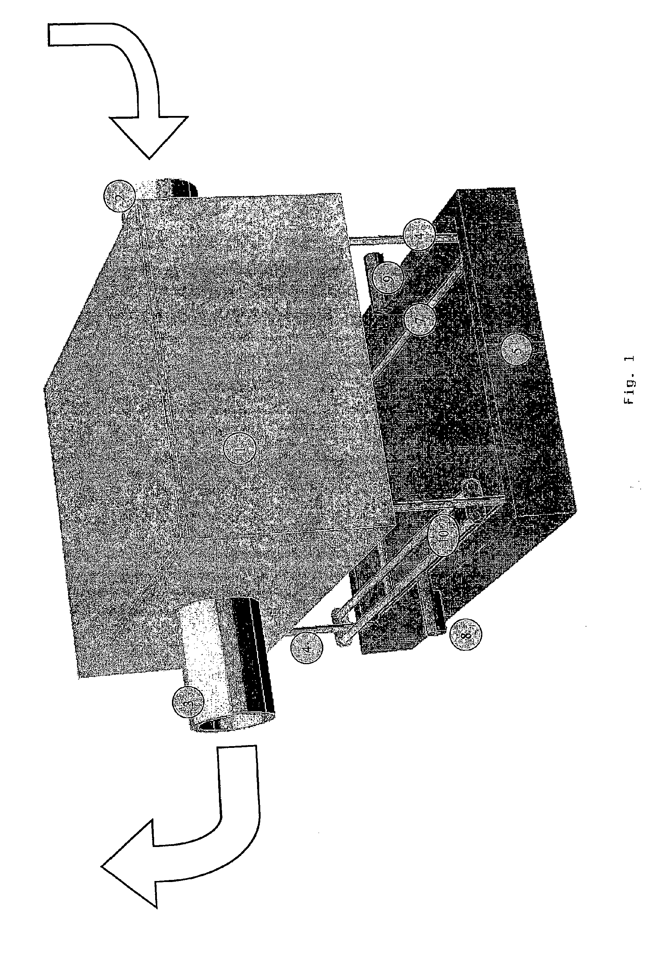

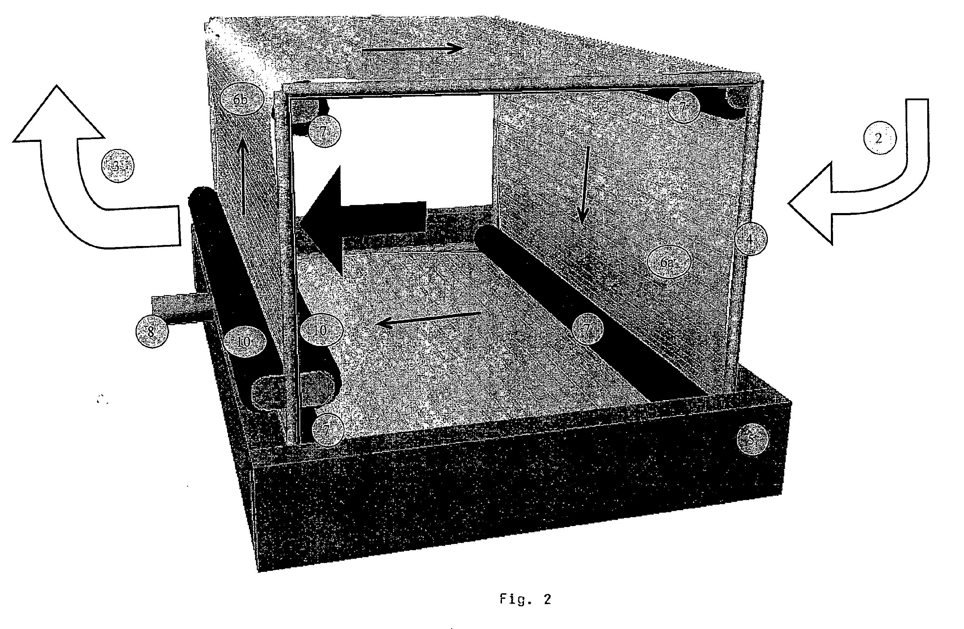

Present invention is shown in an embodiment depicted in the drawing where Fig. 1 presents main view of the device while Fig. 2 presents the device in axonometric projection.

Device for removal of odours from ionic odour-producing substances consists of casing 1 in the shape of open chamber with container 5 in which there is a closed band made of ion exchange material acting as a filter which moves along the rollers 7 which are fixed in the corners of the frame inside the casing 1 and is driven by two rollers 10 fixed to the frame 4 of the casing 1. Casing 1 has inlet port 2 for supply of the gas to be cleaned and outlet port 3 to carry off the cleaned gas. The lower part of the filtering chamber forms a container 5 which has an inlet port 8 for supply of regeneration solution and an outlet port 9 for removal of post-regeneration solution.

The principle of operation of the device is that the gas to be cleaned flows in the filter through inlet port 2 situated in casing 1 and while its flow through band with the layer of ionite 6a, the significant part of odour-producing substance is retained in the ionite bed. Subsequently the gas flows through fresh, regenerated band with ionite layer 6b to leave purified through outlet port 3. The band formed by ion exchange material moves along the rollers 7 placed in the corners of the filter on frame 4. The movement is effected by means of two driving rollers 10. The regeneration solution is delivered through inlet port 8 situated in container 5 while post-regeneration solution is collected through outlet port 9 on the other side of container 5.

### Example 1.

Gases coming from outgassing well of waste disposal depot, containing 90 mg NH₃/m³ are directed at the speed of 180 m/h to filter having surface of filtration of 1 m² and containing ionite Fiban K-1. The ammonia contents at the outlet of the filter was below 0,02 mg/m³. By this method the ionite contained almost 16,2 g NH₃/h.

For ionite regeneration 4% H₂SO₄ was delivered at the quantity of 50 cm³/min.

The post-regeneration solution in concentration of 2,4 % H₂SO₄ and 2,1 % (HH₄)₂SO₄ was recovered in the quantity of 3 dm³/h. The recovered solution, following neutralisation by ammonia or lime could be used as mineral fertiliser. Alternatively, in case of purification of gases coming from waste disposal depot, the post-regeneration solution can be carried off to reflux.

### Example 2.

Ventilation air coming from pig farm, containing 102 mg NH₃/m³ was directed at the speed of 250 m/h to filter containing fibrous ionite Fiban K-1. The ionite filter had surface of filtration of 1 m². The ammonia contents at the outlet of the filter was below 1 mg/m³. By this method the fibrous ionite contained over 25,25 g NH₃/h.

The ionite regeneration was performed with use of 4% H₂SO₄ at the speed of 50 cm³/min. The post-regeneration solution in concentration of 1,6 % H₂SO₄ and 3,3 % (HH₄)₂SO₄ was recovered in the quantity of 3 dm³/h. The recovered solution, following neutralisation by ammonia or lime could be used as mineral fertiliser.

## Claims

1. Method for removal of odours from ionic odour-producing substances, **characterised in that** the gas is directed on preformed ion exchanger in the form of band made of ion exchange material acting as a filter which moves along the rollers, the lower part of the band is submerged in regeneration bath, the gas to be cleaned flows through partially depleted ionite where the odour producing substance is partially removed and subsequently partially purified gas passes through just regenerated ionite, where the remaining odour-producing impurities are removed and the layer of ion exchange material moves and is regenerated in the lower part.

2. Device for removal of odours from ionic odour-producing substances, consisting of casing in the shape of open chamber with container, **characterised in that** in the casing (1) there is a closed band (6a, 6b) made of ion exchange material acting as a filter which moves along the rollers (7) which are fixed in the corners of the frame (4) inside the casing (1) and is driven by two rollers (10) fixed to the frame (4) of the casing (1), the casing (1) has inlet port (2) for supply of the gas to be cleaned and outlet port (3) to carry off the cleaned gas, the lower part of the filtering chamber forms a container (5) which has an inlet port (8) for supply of regeneration solution and an outlet port (9) for removal of post-regeneration solution.
